# EUROPÄISCHE PATENTSCHRIFT

(11) **EP 3 676 586 B1**
(45) Veröffentlichungstag und Bekanntmachung des Hinweises auf die Patenterteilung: **25.10.2023**
(21) Anmeldenummer: 18753408.6
(22) Anmeldetag: 10.08.2018
(51) Int. Cl.: G01K 11/3206, G02B 6/24, C03B 23/207, G02B 6/36, G01K 11/32

(54) **BEFESTIGUNGSVERFAHREN UND TEMPERATURSENSOR**
SECURING METHOD AND TEMPERATURE SENSOR
PROCÉDÉ DE FIXATION ET CAPTEUR DE TEMPÉRATURE

(30) Priorität: 31.08.2017 DE 102017120062
(43) Veröffentlichungstag der Anmeldung: 08.07.2020
(60) Teilanmeldung: 22191620.8
(73) Patentinhaber: FOS4X GmbH, 81371 München (DE)
(72) Erfinder: MÖLLER, Tobias, 82319 Starnberg (DE); KIENITZ, Sascha, 81547 München (DE)
(74) Vertreter: Meissner Bolte Partnerschaft mbB
(86) Internationale Anmeldenummer: PCT/EP2018/071789
(87) Internationale Veröffentlichungsnummer: WO 2019/042747

(56) Entgegenhaltungen:
- EP-A2- 1 144 969
- EP-B1- 1 144 969
- EP-B1- 1 145 059

## Beschreibung

### TECHNISCHES GEBIET

Ausführungsformen der Offenbarung betreffen ein Befestigungsverfahren, einen Temperatursensor, der durch ein Befestigungsverfahren erhalten werden kann.

Ein in einen Lichtwellenleiter integriertes Faser-Bragg-Gitter ist als Temperatursensor verwendbar. Eine thermisch bedingte Längenänderung des Faser-Bragg-Gitters bewirkt eine Verschiebung des spektralen Reflexionsmaximums des Gitters. Durch Beaufschlagung des Gitters mit Licht und einem Auswerten des Reflexionsmaximums kann auf die Temperatur des Gitters zurückgeschlossen werden.

### STAND DER TECHNIK

Neben der zur Temperaturmessung erwünschten Temperaturempfindlichkeit ist ein Faser-Bragg-Gitter-Sensor auch empfindlich gegenüber anderweitigen mechanischen Dehnungen und Stauchungen in Form von externen Störungen. Diese Empfindlichkeit gegenüber den externen Störungen muss mechanisch entkoppelt werden. Eine Möglichkeit besteht darin, den Bereich des Lichtwellenleiters, in dem das Faser-Bragg-Gitter ausgebildet ist, mit einer Kapillare zu umgeben und diese Kapillare mechanisch an dem Lichtwellenleiter zu befestigen.

Es ist bekannt, einen Klebstoff zum Befestigen der Kapillare am Lichtwellenleiter zu verwenden. Die Faser wird in die Kapillare eingeklebt, was sich allerdings nachteilig auf die Temperaturempfindlichkeit auswirken kann. Ferner kann die Verklebung bis zum Faser-Bragg-Gitter vorkriechen und diesen Bereich verkleben, was zu einem Funktionsausfall führen kann.

Des Weiteren sind Verfahren zum mechanischen Befestigen einer Kapillare an einem Bereich eines Lichtwellenleiters bekannt, bei welchen der optische Pfad des Lichtwellenleiters direkt mit einer Fused-Silica-Kapillare verspleißt wird. Die US 2002/0009279 A1 offenbart eine optische Einmodenfaser mit einem Faser-Bragg-Gitter, wobei eine Hülse durch Wärmebehandlung mit einem Bereich der Faser verbunden wird, in welchem der Außendurchmesser der Faser vergrößert ist. EP 1 144 969 A2 und EP 1 145 059 B1 offenbaren ebenfalls optische Fasern mit Bragg-Gittern, die von einer Kapillare umgeben sind, wobei die Kapillaren jeweils durch Verschmelzen mit den Fasern verbunden sind.

Hierdurch kommt es zu einer starken und unerwünschten Signaldämpfung und damit zu einer Verschlechterung der Messsignale. Es ist eine Lösung wünschenswert, bei welcher die Zuverlässigkeit einer mechanischen Verbindung zwischen einem Lichtwellenleiter und einer Kapillare gewährleistet ist, bei gleichzeitig guter Temperaturempfindlichkeit und/oder niedriger Signaldämpfung.

### ZUSAMMENFASSUNG DER OFFENBARUNG

Ausführungsformen der vorliegenden Offenbarung stellen ein Befestigungsverfahren mit den Merkmalen des Anspruchs 1 bereit. Ferner geben Ausführungsformen der vorliegenden Offenbarung eine Befestigungsvorrichtung mit den Merkmalen des Anspruchs 10 an. Des Weiteren geben Ausführungsformen der vorliegenden Offenbarung eine Verwendung einer hierin offenbarten Befestigungsvorrichtung zur Durchführung eines hierin offenbarten Verfahrens an. Außerdem geben Ausführungsformen der vorliegenden Offenbarung einen Lichtwellenleiter an, der mindestens ein integriertes Temperatursensorelement umfasst, wobei der Temperatursensor durch ein hierin beschriebenes Verfahren erhalten werden kann.

Gemäß einer Ausführungsform wird ein Befestigungsverfahren angegeben, das Folgendes umfasst: Bereitstellen eines Lichtwellenleiters aus einem Material mit einer ersten Schmelztemperatur, wobei ein Sensorbereich des Lichtwellenleiters mindestens ein integriertes Temperatursensorelement umfasst, Bereitstellen einer Kapillare aus einem Material mit einer zweiten Schmelztemperatur, derart, dass die Kapillare den Sensorbereich des Lichtwellenleiters zumindest bereichsweise umgibt und dass sich ein Befestigungsbereich der Kapillare beabstandet von dem Sensorbereich befindet, wobei die zweite Schmelztemperatur niedriger als die erste Schmelztemperatur ist, wobei das Temperatursensorelement in einem Endbereich des Lichtwellenleiters angeordnet ist und der Endbereich in die Kapillare eingeführt ist, so dass ein Ende der Kapillare freiliegt; Befestigen des Befestigungsbereichs der Kapillare am Lichtwellenleiter, umfassend ein Erwärmen des Befestigungsbereichs der Kapillare auf eine Erwärmungstemperatur, die gleich groß wie oder größer als die zweite Schmelztemperatur ist, und Erwärmen des freiliegenden Endes der Kapillare auf eine Erwärmungstemperatur, die gleich groß wie oder größer als die zweite Schmelztemperatur ist.

Eine hierin offenbarte Befestigungsvorrichtung weist Folgendes auf: Einen Einführungsbereich für eine Kapillare, die einen Sensorbereich eines Lichtwellenleiters zumindest bereichsweise umgibt, wobei die Kapillare einen Befestigungsbereich umfasst, der beabstandet von dem Sensorbereich des Lichtwellenleiters anordenbar ist, einen Detektor, der dazu konfiguriert ist, eine Markierung an der Kapillare zu detektieren, die an der Kapillare bereitgestellt ist, um den Befestigungsbereich der Kapillare anzuzeigen; und einen Erwärmungsbereich, der dazu konfiguriert ist, den Befestigungsbereich der Kapillare zu erwärmen, vorzugsweise für eine vorbestimmte Zeitdauer automatisch zu erwärmen, wenn der Detektor den Befestigungsbereich detektiert.

Beispielsweise kann die hierin beschriebene Befestigungsvorrichtung zum Durchführen des hierin beschriebenen Befestigungsverfahrens verwendet werden.

Bei Ausführungsformen wird ein Temperatursensor erhalten, in dem ein hierin beschriebenes Befestigungsverfahren durchgeführt wird. Zur Durchführung des Befestigungsverfahrens kann wiederum eine hierin beschriebene Befestigungsvorrichtung verwendet werden. Der erhaltene Temperatursensor weist einen Lichtwellenleiter auf, der seinerseits wiederum ein integriertes Temperatursensorelement aufweist.

Ein Temperatursensorelement, das entlang der Axialrichtung in einen Lichtwellenleiter integriert ist, ist typischerweise ein Faser-Bragg-Gitter. Ein Faser-Bragg-Gitter ist ein optisches Interferenzfilter, das Licht mit einer bestimmten Wellenlänge bzw. Licht, das in einem bestimmten Wellenlängenbereich liegt, reflektiert. Die bestimmte Wellenlänge bzw. der bestimmte Wellenlängenbereich wird über eine Ausdehnung bzw. Stauchung des Faser-Bragg-Gitters in Axialrichtung des Lichtwellenleiters beeinflusst. Auf das Faser-Bragg-Gitter auftreffendes Messlicht wird am Gitter in Abhängigkeit von seiner Wellenlänge reflektiert, bzw. es werden nur Wellenlängenanteile des Messlichts vom Gitter reflektiert, die innerhalb einer Reflexionsbandbreite des Gitters liegen. Die Wellenlängenabhängigkeit ist durch die Ausdehnung bzw. Stauchung beeinflussbar.

Um vorwiegend eine temperaturinduzierte Ausdehnung bzw. Stauchung des Bereichs des Lichtwellenleiters zu messen, der das Faser-Bragg-Gitter enthält, wird dieser Bereich (nachfolgend als Sensorbereich bezeichnet) des Lichtwellenleiters durch das hierin beschriebene Verfahren mechanisch entkoppelt.

Dadurch, dass nur die Kapillare geschmolzen wird, wird der optische Pfad des Lichtwellenleiters nicht oder nicht nennenswert beeinflusst, und es ergibt sich im Wesentlichen keine zusätzliche Signaldämpfung durch das Befestigungsverfahren.

Dadurch, dass das freiliegende Ende der Kapillare auf eine Erwärmungstemperatur erwärmt wird, die gleich groß wie oder größer ist als die zweite Schmelzemperatur, ist auch das Ende, das dem Befestigungsbereich gegenüberliegt, entsprechend abgedichtet, so dass ein Eindringen von Fremdmaterial in den Innenraum der Kapillare vermieden werden kann.

Das Verfahren ist zudem klebstofffrei. Dadurch kann eine Beeinflussung des Temperaturverhaltens durch Klebstoff, der in herkömmlichen Verfahren zum Einsatz kommt, vermieden werden. Außerdem kann die Betriebstemperatur auch oberhalb eines Bereichs liegen, in welchem herkömmlich zum Befestigen verwendeter Klebstoff nicht einsatzfähig wäre. Durch die Abwesenheit von Klebstoff kann dieser nicht in den Bereich des Temperatursensorelements kriechen und dieses beeinträchtigen.

Die Verbindung zwischen der Kapillare und dem Lichtwellenleiter erfolgt verfahrensgemäß durch einen Spleißvorgang. Durch das gezielte Schmelzen der Kapillare im Befestigungsbereich verändert der Befestigungsbereich der Kapillare zumindest abschnittsweise seinen Innendurchmesser. Der Befestigungsbereich kommt mit dem Lichtwellenleiter in mechanischen Kontakt und hält diesen durch Reibung in Position. Dadurch, dass der Befestigungsbereich von dem Sensorbereich des Lichtwellenleiters beabstandet ist, wird der Sensorbereich im Wesentlichen nicht beeinflusst. Es ergibt sich eine klebstofffreie und dichte Verbindung.

Beispielsweise wird zum Durchführen des Verfahrens ein Spleißgerät dazu verwendet, die definierte Stelle an der Kapillare, die dem Befestigungsbereich entspricht, auf die Erwärmungstemperatur zu erwärmen. Dadurch schmilzt (lediglich) die Kapillare und härtet anschließend im verformten Zustand wieder aus, in welchem sie einen mechanischen Kontakt mit dem Lichtwellenleiter hat. Der optische Pfad des Lichtwellenleiters wird dadurch nicht oder nicht nennenswert beeinträchtigt.

Ein nicht-einschränkendes Beispiel für das Material der Kapillare ist Borosilikat. Ein nicht-einschränkendes Beispiel für das Material des Lichtwellenleiters ist Glasfaser (Siliciumdioxid). Die erste Schmelztemperatur, d. h. diejenige des Lichtwellenleiters, liegt dann bei ca. 1000 °C. Die zweite Schmelztemperatur, d. h. diejenige der Kapillare, liegt dann bei ca. 700 °C.

Bei Ausführungsformen ist die Erwärmungstemperatur kleiner als die erste Schmelztemperatur. Dadurch kann auf einfache Weise sichergestellt werden, dass das Material des Lichtwellenleiters während des Befestigungsvorgangs im ungeschmolzenen Zustand verbleibt und damit der optische Pfad nicht beeinträchtigt wird. Die Erwärmungstemperatur, die gemäß der Ausführungsform kleiner ist als die erste Schmelztemperatur, ist zumindest die Erwärmungstemperatur, mit welcher der Befestigungsbereich der Kapillare erwärmt wird. Zusätzlich kann auch die Erwärmungstemperatur, die gemäß der Ausführungsform kleiner ist als die erste Schmelztemperatur, die Erwärmungstemperatur sein, mit welcher das freiliegende Ende der Kapillare erwärmt wird.

Bei Ausführungsformen umfasst das Befestigen weiter ein Erwärmen des Befestigungsbereichs auf die Erwärmungstemperatur während eines Zeitraums mit einer vorbestimmten Dauer, und ein anschließendes Erkaltenlassen des Befestigungsbereichs. Dadurch kann gewährleistet werden, dass die Kapillare sicher mit dem Lichtwellenleiter verbunden wird, und dass nach dem Abschluss des Befestigungsvorgangs die Kapillare sicher in ihrer Position verbleibt.

Es ist auch möglich, dass die Erwärmungstemperatur gleich groß wie oder größer als die erste Schmelztemperatur gewählt wird. Gemäß diesem Aspekt erfolgt das Erwärmen des Befestigungsbereichs der Kapillare auf die Erwärmungstemperatur während eines Zeitraums mit einer vorbestimmten Dauer, wobei die vorbestimmte Dauer des Zeitraums so gewählt ist, dass sich das Material des Lichtwellenleiters während des Befestigens auf eine Temperatur erwärmt, die kleiner als die erste Schmelztemperatur ist. Anschließend wird der Befestigungsbereich erkalten gelassen.

Durch die Wahl der Zeitdauer wird gemäß diesem Aspekt gewährleistet, dass sich die Wärme nicht derart bis zum Lichtwellenleiter ausbreiten kann, dass dieser schmilzt. Gemäß diesem Aspekt kann ein zügigerer Befestigungsvorgang erzielt werden.

Bei Ausführungsformen umfasst das Befestigen weiter ein zeitweises Fixieren des Befestigungsbereichs vor dem Erwärmen, und zwar relativ zumindest zu der Axialrichtung des Lichtwellenleiters, nach dem Erkaltenlassen wird die Fixierung gelöst.

Dadurch kann gewährleistet werden, dass sich die Kapillare entlang der Achse des Lichtwellenleiters nicht verschiebt, bevor sie durch das Erkalten reibschlüssig mit diesem Verbunden ist, so dass die optischen Eigenschaften des Lichtwellenleiters nicht durch eine ungewollte Verschiebung der Kapillare beeinträchtigt werden.

Bei Ausführungsformen ist die vorbestimmte Zeitdauer mindestens so lang, dass bei gegebenem Durchmesser, gegebener Materialstärke und gegebener Ausdehnung des Befestigungsbereichs in Axialrichtung das Material der Kapillare im Befestigungsbereich schmilzt. Die vorbestimmte Zeitdauer ist zudem maximal so lang, dass das Material des Lichtwellenleiters im ungeschmolzenen Zustand verbleibt.

Dadurch kann gewährleistet werden, dass die Verbindung zwischen dem Befestigungsbereich der Kapillare und dem Lichtwellenleiter sicher und zuverlässig erfolgt.

Bei Ausführungsformen ist die vorbestimmte Zeitdauer maximal so lang, dass ein Bereich der Kapillare, der den Sensorbereich des Lichtwellenleiters umgibt, im ungeschmolzenen Zustand verbleibt.

Dadurch kann gewährleistet werden, dass der Sensorbereich des Lichtwellenleiters bzw. das dort enthaltene Temperatursensorelement weitgehend unbeeinflusst von geschmolzenem Kapillarmaterial bleibt, so dass die optischen Eigenschaften nicht beeinträchtigt werden.

Bei Ausführungsformen ist der Befestigungsbereich der Kapillare um eine Achse der Kapillare umlaufend bereitgestellt, und der Befestigungsbereich liegt nach dem Befestigen umlaufend reibschlüssig an der Umfangsfläche des Lichtwellenleiters an. Alternativ oder zusätzlich liegt der Befestigungsbereich gemäß diesem Aspekt umlaufend abdichtend an der Umfangsfläche des Lichtwellenleiters an.

Durch einen umlaufend gewährleisteten Reibschluss kann die Kapillare sicher am Lichtwellenleiter fixiert werden. Eine umlaufende Abdichtung kann dazu beitragen, ein Eindringen von Fremdmaterial in den Innenraum der Kapillare zu vermeiden.

Bei Ausführungsformen weist der Befestigungsbereich der Kapillare mindestens eine axiale Ausdehnung, die geeignet ist, um nach dem Befestigen einer vorbestimmten Kraft in Axialrichtung zwischen der Kapillare und dem Lichtwellenleiter zu widerstehen.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
- Fig. 1: eine schematische Darstellung eines Lichtwellenleiters und einer Kapillare zur Erläuterung eines Befestigungsverfahrens gemäß einer Ausführungsform;
- Fig. 2: eine schematische Darstellung des Lichtwellenleiters und der Kapillare aus Fig. 1 an einer Befestigungsvorrichtung, die zum Durchführen eines Befestigungsverfahrens gemäß einer Ausführungsform geeignet ist,
- Fig. 3: ein Ablaufdiagramm eines Befestigungsverfahrens gemäß einer Ausführungsform.

Nachstehend werden Ausführungsformen der Erfindung näher erläutert. Die Zeichnungen dienen der Veranschaulichung eines oder mehrerer Beispiele von Ausführungsformen der Erfindung.

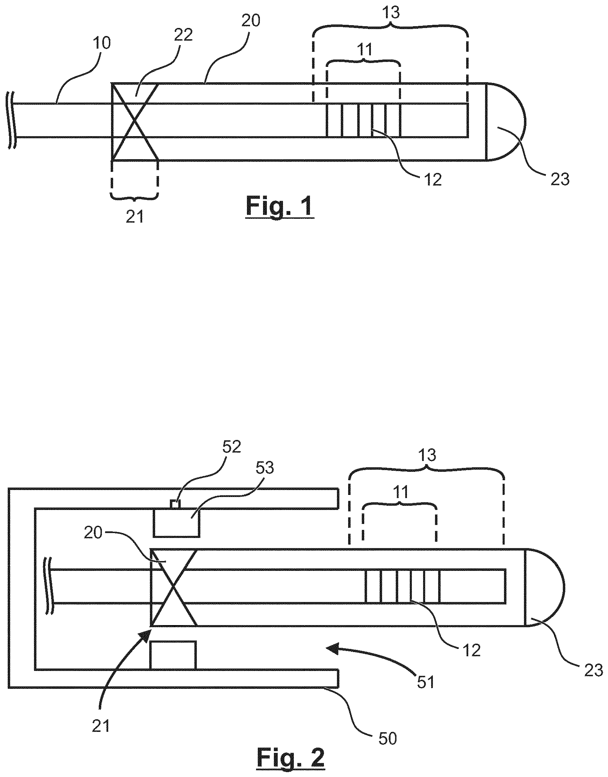

Fig. 1 zeigt eine schematische Darstellung eines Lichtwellenleiters 10 mit einem endseitig angeordneten Sensorbereich 11. Im Sensorbereich 11, der in einem Endbereich 13 des Lichtwellenleiters 10 vorgesehen ist, ist als ein Temperatursensorelement 12 beispielhaft ein Faser-Bragg-Gitter ausgebildet. Der Lichtwellenleiter 10 der Ausführungsform ist als nicht-einschränkendes Beispiel aus SiO₂ mit einer ersten Schmelztemperatur von ca. 1000 °C ausgebildet.

Eine Kapillare 20, die ist als nicht-einschränkendes Beispiel aus Borosilikat mit einer zweiten Schmelztemperatur von ca. 700 °C ausgebildet ist, umgibt den Sensorbereich 11 des Lichtwellenleiters 10 umlaufend. Die Kapillare 20 erstreckt sich in einer Axialrichtung des Lichtwellenleiters 10 vom Endbereich 13 weg und weist in einem Abschnitt, der sich in einem gewissen Abstand vom Sensorbereich 11 des Lichtwellenleiters 10 befindet, einen Befestigungsbereich 21 auf. Am Befestigungsbereich 21 ist beispielhaft eine Markierung 22 angebracht. Die Markierung 22 kann optisch sein, sie kann aber auch alternativ oder zusätzlich maschinendetektierbar sein, beispielsweise magnetisch oder dergleichen.

Fig. 2 zeigt den Lichtwellenleiter 10 mit der Kapillare 20 an einer schematisch dargestellten Befestigungsvorrichtung 50, die beispielhaft zur Durchführung des Verfahrens verwendet werden kann. Die Befestigungsvorrichtung 50 umfasst einen Einführungsbereich 51 für die Kapillare 20, einen Detektor 52, der dazu konfiguriert ist, die Markierung 22 an der Kapillare 20 zu detektieren, sowie einen Erwärmungsbereich 53, der dazu konfiguriert ist, den Befestigungsbereich 21 der Kapillare 20 zu erwärmen, wenn der Detektor 52 die Markierung 22 detektiert hat und ggf. ihre Position bestimmt hat.

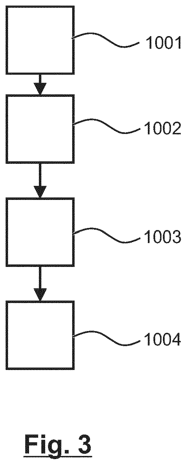

Eine Ausführungsform des Verfahrens wird anhand eines Ablaufdiagramms aus Fig. 3 unter weiterer Bezugnahme auf die Fig. 1 und 2 erläutert.

In 1001 wird der Lichtwellenleiter 10 bereitgestellt. Der Lichtwellenleiter 10 ist aus einem Material ausgebildet, das eine erste Schmelztemperatur hat. Ein Sensorbereich des Lichtwellenleiters 10 umfasst das Faser-Bragg-Gitter als ein integriertes Temperatursensorelement 12.

In 1002 wird die Kapillare 20 so bereitgestellt, dass die Kapillare 20 den Sensorbereich 11 des Lichtwellenleiters 10 zumindest bereichsweise umgibt und dass sich der Befestigungsbereich 21 der Kapillare 20 axial beabstandet von dem Sensorbereich 11 befindet. Die Kapillare 20 hat eine zweite Schmelztemperatur, die niedriger als die erste Schmelztemperatur des Lichtwellenleiters 10 ist.

In 1003 wird der Befestigungsbereich 21 der Kapillare 20 am Lichtwellenleiter 10 befestigt. Beim Befestigen wird der Befestigungsbereich 21 der Kapillare 20 auf eine Erwärmungstemperatur erwärmt. Die Erwärmungstemperatur ist gleich groß wie oder größer als die zweite Schmelztemperatur. Das Erwärmen erfolgt beispielsweise mit dem Erwärmungsbereich 53 der Befestigungsvorrichtung 50.

Bei der Ausführungsform wird in 1004 außerdem ein freiliegendes Ende 23 der Kapillare auf eine Erwärmungstemperatur erwärmt, die gleich groß wie oder größer als die zweite Schmelztemperatur ist. Das Erwärmen des freiliegenden Endes 23 kann ebenfalls mit dem Erwärmungsbereich 53 der Befestigungsvorrichtung 50 erfolgen. Es kann eine weitere Markierung (nicht dargestellt) am freiliegenden Ende 23 der Kapillare 20 bereitgestellt sein, die der Detektor 52 detektiert und ggf. nach einer entsprechenden Positionsbestimmung den Erwärmungsbereich 53 veranlasst, im Bereich der weiteren Markierung das freiliegende Ende 23 zu erwärmen. Es kann auch vorgesehen sein, dass der Detektor 52 das Ende der Kapillare 20 (das freiliegende Ende 23) markierungslos detektiert und dort den Erwärmungsbereich 53 veranlasst, das freiliegende Ende 23 zu erwärmen. Es kann auch vorgesehen sein, dass das freiliegende Ende 23 ohne eine Detektion erwärmt wird, beispielsweise durch eine von extern vorgenommene Positionierung des Erwärmungsbereichs 53.

Dadurch wird ein Temperatursensor erhalten, dessen Temperatursensorelement 12 von unerwünschten mechanischen Einflüssen mittels der Kapillare 20 weitgehend entkoppelt ist. Die Kapillare 20 ist klebstofffrei zuverlässig mit ihrem Befestigungsbereich 21 mittels Reibung mit dem Lichtwellenleiter 10 verbunden und umlaufend abgedichtet. Am freiliegenden Ende 23 ist außerdem die Dichtigkeit durch den Erwärmungsvorgang gewährleistet.

## Patentansprüche

1. Befestigungsverfahren, umfassend:
Bereitstellen (1001) eines Lichtwellenleiters (10) aus einem Material mit einer ersten Schmelztemperatur, wobei ein Sensorbereich (11) des Lichtwellenleiters mindestens ein integriertes Temperatursensorelement (12) umfasst;
Bereitstellen (1002) einer Kapillare (20) aus einem Material mit einer zweiten Schmelztemperatur, derart, dass die Kapillare (20) den Sensorbereich (11) des Lichtwellenleiters (10) zumindest bereichsweise umgibt und dass sich ein Befestigungsbereich (21) der Kapillare beabstandet von dem Sensorbereich (11) befindet, wobei die zweite Schmelztemperatur niedriger als die erste Schmelztemperatur ist, wobei das Temperatursensorelement (12) in einem Endbereich (13) des Lichtwellenleiters angeordnet ist und der Endbereich in die Kapillare (20) eingeführt ist, so dass ein Ende (23) der Kapillare (20) freiliegt;
Befestigen (1003) des Befestigungsbereichs der Kapillare (20) am Lichtwellenleiter (10), umfassend ein Erwärmen des Befestigungsbereichs der Kapillare (20) auf eine Erwärmungstemperatur, die gleich groß wie oder größer als die zweite Schmelztemperatur ist;
Erwärmen (1004) des freiliegenden Endes (23) der Kapillare (20) auf eine Erwärmungstemperatur, die gleich groß wie oder größer als die zweite Schmelztemperatur ist.

2. Befestigungsverfahren nach Anspruch 1, wobei die Erwärmungstemperatur kleiner als die erste Schmelztemperatur ist.

3. Befestigungsverfahren nach Anspruch 1 oder 2, wobei das Befestigen umfasst:
Erwärmen des Befestigungsbereichs (21) auf die Erwärmungstemperatur für eine vorbestimmte Zeitdauer; und
Erkaltenlassen des Befestigungsbereichs (21).

4. Befestigungsverfahren nach Anspruch 1, wobei das Befestigen umfasst:
Erwärmen des Befestigungsbereichs (21) auf die Erwärmungstemperatur, wobei die Erwärmungstemperatur gleich groß wie oder größer als die erste Schmelztemperatur ist, für eine vorbestimmte Zeitdauer, wobei die vorbestimmte Zeitdauer so gewählt ist, dass sich das Material des Lichtwellenleiters (10) während des Befestigens auf eine Temperatur erwärmt, die kleiner als die erste Schmelztemperatur ist; und
Erkaltenlassen des Befestigungsbereichs.

5. Befestigungsverfahren nach Anspruch 3 oder 4, wobei das Befestigen ferner umfasst:
zeitweises Fixieren des Befestigungsbereichs (21) relativ zumindest zur Axialrichtung des Lichtwellenleiters (10) vor dem Erwärmen; und
Lösen der Fixierung nach dem Erkaltenlassen.

6. Befestigungsverfahren nach einem der Ansprüche 3 bis 5,
wobei die vorbestimmte Zeitdauer mindestens so lang ist, dass bei gegebenem Durchmesser, gegebener Materialstärke und gegebener Ausdehnung des Befestigungsbereichs in Axialrichtung das Material der Kapillare (20) im Befestigungsbereich (21) schmilzt, und wobei die vorbestimmte Zeitdauer maximal so lang ist, dass das Material des Lichtwellenleiters (10) im ungeschmolzenen Zustand verbleibt.

7. Befestigungsverfahren nach einem der Ansprüche 3 bis 6,
wobei die vorbestimmte Zeitdauer maximal so lang ist, dass ein Bereich der Kapillare (20), der den Sensorbereich (11) des Lichtwellenleiters umgibt, im ungeschmolzenen Zustand verbleibt.

8. Befestigungsverfahren nach einem der vorhergehenden Ansprüche, wobei der Befestigungsbereich (21) der Kapillare (20) um eine Achse der Kapillare (20) umlaufend bereitgestellt ist, und wobei der Befestigungsbereich (21) nach dem Befestigen umlaufend reibschlüssig und/oder umlaufend abdichtend an der Umfangsfläche des Lichtwellenleiters (10) anliegt.

9. Befestigungsverfahren nach einem der vorhergehenden Ansprüche, wobei der Befestigungsbereich der Kapillare (20) mindestens eine axiale Ausdehnung aufweist, die geeignet ist, um nach dem Befestigen einer vorbestimmten Kraft in Axialrichtung zwischen der Kapillare (20) und dem Lichtwellenleiter (10) zu widerstehen.

10. Temperatursensor, umfassend einen Lichtwellenleiter (10) mit mindestens einem integrierten Temperatursensorelement (12), **dadurch gekennzeichnet, dass** der Temperatursensor durch ein Befestigungsverfahren nach einem der Ansprüche 1 bis 9 erhalten werden kann.

## Claims

1. A securing method, comprising:
providing (1001) an optical waveguide (10) made of a material having a first melting temperature, wherein a sensor region (11) of the optical waveguide comprises at least one integrated temperature sensor element (12);
providing (1002) a capillary (20) made of a material having a second melting temperature in such a manner that the capillary (20) surrounds at least regions of the sensor region (11) of the optical waveguide (10), and that a securing region (21) of the capillary is arranged spaced apart from the sensor region (11), wherein the second melting temperature is lower than the first melting temperature, wherein the temperature sensor element (12) is arranged in an end region (13) of the optical waveguide, and the end region is inserted into the capillary (20) so that an end (23) of the capillary (20) is exposed;
securing (1003) the securing region of the capillary (20) to the optical waveguide (10), comprising a heating of the securing region of the capillary (20) to a heating temperature that is equal to or higher than the second melting temperature;
heating (1004) the exposed end (23) of the capillary (20) to a heating temperature that is equal to or higher than the second melting temperature.

2. The securing method according to claim 1, wherein the heating temperature is lower than the first melting temperature.

3. The securing method according to claim 1 or 2, wherein the securing comprises:
heating the securing region (21) to the heating temperature for a predetermined period of time; and
allowing the securing region (21) to cool down.

4. The securing method according to claim 1, wherein the securing comprises:
heating the securing region (21) to the heating temperature, wherein the heating temperature is equal to or higher than the first melting temperature, for a predetermined period of time, wherein the predetermined period of time is selected such that the material of the optical waveguide (10) is heated during securing to a temperature that is lower than the first melting temperature; and
allowing the securing region to cool down.

5. The securing method according to claim 3 or 4, wherein the securing further comprises:
temporarily fixing the securing region (21) relative to at least the axial direction of the optical waveguide (10) prior to heating; and
after allowing to cool down, releasing the fixing.

6. The securing method according to any one of claims 3 to 5,
wherein the predetermined period of time is at least so long that at a given diameter, a given material thickness and a given elongation of the securing region in the axial direction, the material of the capillary (20) melts in the securing region (21), and wherein the predetermined period of time is at most so long that the material of the optical waveguide (10) remains in the non-molten state.

7. The securing method according to any one of claims 3 to 6,
wherein the predetermined period of time is at most so long that a region of the capillary (20) surrounding the sensor region (11) of the optical waveguide remains in the non-molten state.

8. The securing method according to any one of the preceding claims,
wherein the securing region (21) of the capillary (20) is provided extending circumferentially around an axis of the capillary (20), and wherein, after securing, the securing region (21) rests against the peripheral surface of the optical waveguide (10) in a circumferentially frictionally engaged manner and/or a circumferentially sealed manner.

9. The securing method according to any one of the preceding claims,
wherein the securing region of the capillary (20) has at least one axial elongation which is suitable to withstand a predetermined force in the axial direction between the capillary (20) and the optical waveguide (10) after securing.

10. A temperature sensor, comprising an optical waveguide (10) having at least one integrated temperature sensor element (12), **characterized in that** the temperature sensor can be obtained by a securing method according to any one of claims 1 to 9.

## Revendications

1. Procédé de fixation comprenant de :
fournir (1001) un guide d'ondes optique (10) constitué d'un matériau ayant une première température de fusion, dans lequel une zone de capteur (11) du guide d'ondes optique comprend au moins un élément de capteur de température intégré (12) ;
fournir (1002) un capillaire (20) constitué d'un matériau ayant une deuxième température de fusion, de telle sorte que le capillaire (20) entoure au moins partiellement la zone de capteur (11) du guide d'ondes optique (10) et une zone de fixation (21) du capillaire soit située à distance de la zone de capteur (11), dans lequel la deuxième température de fusion est inférieure à la première température de fusion, dans lequel l'élément de capteur de température (12) est disposé dans une zone d'extrémité (13) du guide d'onde optique et la zone d'extrémité est insérée dans le capillaire (20) de telle sorte qu'une extrémité (23) du capillaire (20) soit exposée ;
fixer (1003) la zone de fixation du capillaire (20) au guide d'ondes optique (10), comprenant un chauffage de la zone de fixation du capillaire (20) à une température de chauffage égale ou supérieure à la deuxième température de fusion ;
chauffer (1004) l'extrémité exposée (23) du capillaire (20) à une température de chauffage égale ou supérieure à la deuxième température de fusion.

2. Procédé de fixation selon la revendication 1, dans lequel la température de chauffage est inférieure à la première température de fusion.

3. Procédé de fixation selon la revendication 1 ou 2, dans lequel la fixation comprend de :
chauffer la zone de fixation (21) à la température de chauffage pendant une période de temps prédéterminée ; et
permettre à la zone de fixation (21) de refroidir.

4. Procédé de fixation selon la revendication 1, dans lequel la fixation comprend de :
chauffer la zone de fixation (21) à la température de chauffage, dans lequel la température de chauffage est égale ou supérieure à la première température de fusion, pendant une période de temps prédéterminée, dans lequel la période de temps prédéterminée est sélectionnée de telle sorte que le matériau du guide d'ondes optique (10) chauffe jusqu'à une température pendant la fixation qui est inférieure à la première température de fusion ; et
permettre à la zone de fixation de refroidir.

5. Procédé de fixation selon la revendication 3 ou 4, dans lequel la fixation comprend également de :
fixer temporairement la zone de fixation (21) par rapport au moins à la direction axiale du guide d'ondes (10) avant le chauffage ; et
débloquer la fixation après le refroidissement.

6. Procédé de fixation selon une des revendications 3 à 5,
dans lequel la période de temps prédéterminée est au moins suffisamment longue pour que le matériau du capillaire (20) fonde dans la zone de fixation (21) pour un diamètre donné, une épaisseur de matériau donnée et une expansion donnée de la zone de fixation dans la direction axiale, et dans lequel la période de temps prédéterminée est au maximum si longue que le matériau de guide d'ondes (10) reste à l'état non fondu.

7. Procédé de fixation selon une quelconque des revendications 3 à 6,
dans lequel la période de temps prédéterminée est au maximum si longue qu'une zone du capillaire (20) qui entoure la zone de capteur (11) du guide d'ondes optique, reste à l'état non fondu.

8. Procédé de fixation selon une des revendications précédentes, dans lequel la zone de fixation (21) du capillaire (20) est disposée circonférentiellement autour d'un axe du capillaire (20), et la zone de fixation (21) s'appuie contre la surface périphérique du guide d'ondes optique (10) de manière circonférentielle par friction et/ou de manière étanche circonférentiellement après la fixation.

9. Procédé de fixation selon une des revendications précédentes, dans lequel la zone de fixation du capillaire (20) présente au moins une expansion axiale, qui est appropriée pour résister à une force prédéterminée dans la direction axiale entre le capillaire (20) et le guide d'ondes optique (10) après la fixation.

10. Capteur de température, comprenant un guide d'ondes optique (10) avec au moins un élément de capteur de température intégré (12), **caractérisé en ce que** le capteur de température peut être obtenu par un procédé de fixation selon une quelconque des revendications 1 à 9.
